# FASCICULE DE BREVET EUROPEEN

(11) **EP 2 243 339 B1**
(45) Date de publication et mention de la délivrance du brevet: **06.06.2012**
(21) Numéro de dépôt: 09706899.3
(22) Date de dépôt: 21.01.2009
(51) Int. Cl.: H05B 41/30, H05B 41/32, G01J 3/02, G03B 15/05

(54) **GENERATEUR DE FLASHS LUMINEUX, SPECTROMETRE D'ABSORPTION COMPRENANT UN TEL GENERATEUR ET PROCEDE DE GENERATION DE FLASHS LUMINEUX**
LICHTBLITZGENERATOR, ABSORPTIONSSPEKTROMETER MIT EINEM SOLCHEN GENERATOR UND VERFAHREN ZUR ERZEUGUNG VON LICHTBLITZEN
LIGHT FLASH GENERATOR, ABSORPTION SPECTROMETER INCLUDING SUCH GENERATOR, AND METHOD FOR GENERATING LIGHT FLASHES

(30) Priorité: 24.01.2008 FR 0850457
(43) Date de publication de la demande: 27.10.2010
(73) Titulaire: Universite Paris-Sud, 91400 Orsay (FR)
(72) Inventeur: MARIGNIER, Jean-Louis, F-92190 Meudon (FR); HERREN, Raymond, F-78830 Bonnelles (FR); BAZOUIN, Jean Robert, F-91600 Savigny sur Orge (FR)
(74) Mandataire: Michelet, Alain
(86) Numéro de dépôt international: PCT/FR2009/050082
(87) Numéro de publication internationale: WO 2009/095584

(56) Documents cités:
- EP-A- 0 464 688
- EP-A- 0 705 058
- EP-A- 1 020 968
- EP-A- 1 455 556
- WO-A-02/071815
- FR-A- 2 867 347

## Description

L'invention concerne un générateur de flashs lumineux, un spectromètre d'absorption comprenant un tel générateur et un procédé de génération de flashs lumineux.

Les générateurs de flashs lumineux comprennent habituellement une lampe à décharge, communément appelée lampe flash, capable d'émettre des impulsions lumineuses à une fréquence de répétition de plusieurs dizaines de hertz.

Les lampes flash Xénon (bulbes ou tubes), par exemple, émettent de grandes quantités d'énergie spectrale dans des impulsions de courte durée. L'énergie d'alimentation s'accumule dans un condensateur de stockage. Quand cette énergie est libérée et dissipée, elle forme un plasma xénon hautement excité dans la lampe à décharge. L'énergie libérée couvre une gamme spectrale étendue de l'ultraviolet (UV) à l'infrarouge (IR), ressemblant fortement à la lumière du soleil.

L'impulsion lumineuse intense d'énergie radiante est utilisée dans de nombreuses applications : arrêt de mouvement, pompage laser, polymérisation UV de polymères, décapage de peinture, et tout particulièrement comme source spectrale stable pour des mesures d'absorption ou de fluorescence.

Un tel générateur de flashs lumineux peut servir de lumière d'analyse pour des mesures de spectrophotométrie d'absorption optique dont le détecteur peut être une caméra à balayage de fente (« streak-camera »), comme par exemple, sur l'une des trois aires expérimentales sur lesquelles est distribué le faisceau d'électrons produit par l'accélérateur « ELYSE » du Laboratoire de Chimie Physique de l'Université Paris-Sud.

Les systèmes de détection par spectrophotométrie d'absorption optique de l'art antérieur ne sont pas efficaces pour enregistrer les spectres d'absorption transitoires d'espèces chimiques instables, produites par le passage d'un faisceau d'électrons dans des échantillons, ainsi que l'évolution avec le temps de ces spectres à toutes les longueurs d'ondes.

Ces systèmes de mesure de l'art antérieur ne permettent d'enregistrer soit qu'un seul spectre d'absorption à un temps donné, soit l'évolution du spectre avec le temps, mais à une seule longueur d'onde, par des méthodes de mesures point par point à des temps différents. Les mesures point par point à des temps différents sont ensuite recombinées pour obtenir une évolution temporelle du spectre complet.

Ces méthodes de l'art antérieur nécessitent un grand nombre d'irradiation des échantillons, ce qui dans certains cas leur est néfaste. Par ailleurs, dans le domaine de l'analyse temporelle, ces sytèmes de détection ne couvrent pas les temps compris entre 2 et 10 nanosecondes.

Les générateurs de flashs lumineux actuels comprennent un condensateur de stockage d'énergie chargé qui est normalement connecté aux deux électrodes principales (nommées "anode" et "cathode") de la lampe à décharge. La tension de charge du condensateur est généralement inférieure à celle qui provoque l'ionisation du xénon. Le processus qui provoque l'ionisation initiale est appelé « déclenchement » ou « amorçage » (ou « Triggering »). L'amorçage crée un gradient de tension (Volts/mm) dans le gaz, d'amplitude suffisante pour provoquer l'ionisation.

La plupart des méthodes d'amorçage utilisent un transformateur d'amorçage pour produire des impulsions haute tension de courte durée. L'ionisation, qui est mise en évidence par un fin sillage lumineux entre les électrodes principales, crée un chemin conducteur au travers duquel peut se décharger le condensateur de stockage d'énergie. Au fur et à mesure que le niveau d'ionisation augmente, l'écoulement augmente en section et produit un flash intense.

Ces lampes flashs nécessitent un grand nombre d'amorçage (un amorçage par flash), ce qui est un facteur principal de détérioration des lampes à décharge. La durée de vie de ces lampes flashs est très courte.

Pour l'augmenter, il est connu d'utiliser une impulsion d'amorçage initial unique, préalable à toute séquence de flashs, pour provoquer un écoulement ionisé fin entre l'anode et la cathode : c'est le régime « Simmer ». L'écoulement ionisé est entretenu par un courant très faible (quelques dizaines de milliampères). Il est assuré par une alimentation variable (pour tout type de lampe) de 500 à 3000 Volts sous 60 milliampères. On n'utilise qu'un seul amorçage pour une grande série de flashs.

Le régime « Simmer » permet de multiplier la durée de vie d'une lampe à décharge par un facteur 100 à 1000.

Néanmoins, pendant le fonctionnement en régime « Simmer » la lampe à décharge a un comportement proche des plasmas froids. Un courant imposé plus fort est lent à s'établir. Avec l'élévation de l'intensité de courant, le gaz dans la lampe à décharge tend à devenir un plasma chaud aux propriétés électrocinétiques différentes.

Dishington et Goncz ont proposé deux modèles comportementaux pour comprendre ces deux types de fonctionnement. Ils ont mis en évidence que le passage de l'un à l'autre de ces fonctionnements se fait par une zone instable qui est la cause de fluctuations importantes lors du déclenchement de la décharge principale.

Le délai entre l'amorçage et le flash (ou délai de réponse de la lampe à décharge), communément appelé « jitter », est un délai de nature aléatoire entre l'ordre et son effet. Ce délai entre l'amorçage et le flash ou « jitter » provient d'une incertitude de temps entre l'impulsion électrique et l'impulsion lumineuse. Le régime transitoire entre l'impulsion électrique et l'impulsion lumineuse est habituelement incontrôlable. Le délai entre l'amorçage et le flash est compté, dans le meilleur des cas le plus souvent entre 200 ns et 5 µs (microsecondes), avec des éclateurs et suivant le type de lampe à décharge. Et dans le cas d'utilisation de commutateurs classiques, ce délai est de l'ordre de 100 à 200 ns et dépend de la tension à commuter.

Un des objectifs de la présente invention est donc de proposer un générateur de flashs lumineux et un procédé de génération de flashs lumineux permettant d'obtenir une fréquence de répétition des impulsions lumineuses de plusieurs dizaines ou centaines de hertz avec une puissance variable pouvant être très élevée, et un délai entre l'amorçage et le flash reproductible et très faible (inférieur à 10 nano-secondes).

Un autre objectif de la présente invention est également de proposer un spectromètre d'absorption permettant d'enregistrer des spectres d'absorption avec une résolution temporelle allant jusqu'à 3,7 picosecondes.

A cet effet, l'invention concerne un générateur de flashs lumineux comprenant :
- une lampe à décharge, apte à recevoir des impulsions électriques et à générer des impulsions lumineuses, et comportant trois électrodes dont une anode, une cathode et une électrode d'amorçage,
- un circuit d'alimentation en continu de la lampe à décharge apte à produire une tension V2 et un courant d'intensité I2, entre l'anode et la cathode, pendant une durée t2,
- un circuit d'amorçage de la lampe à décharge apte à fournir une impulsion électrique d'amorçage d'intensité I1 et de tension V1 sur l'électrode d'amorçage de la lampe à décharge, générant entre autre, un peu avant et un peu après les flashs lumineux, un écoulement ionisé fin d'intensité I2, entre l'anode et la cathode, pendant une durée t2',
- un circuit de décharge principale relié entre l'anode et la cathode de la lampe à décharge, ledit circuit de décharge principale étant apte à stocker et à décharger l'énergie électrique nécessaire pour générer une ou plusieurs décharges électriques d'intensité I3, sous une tension V3, dans la lampe à décharge, produisant une impulsion lumineuse ou une série d'impulsions lumineuses principales pendant une durée t3 inférieure à la durée t2', l'intensité 13 et la tension V3 étant supérieures à l'intensité I2 et à la tension V2 respectivement.

Selon l'invention, le générateur de flashs lumineux comprend un circuit de pré-expansion relié entre l'anode et la cathode de la lampe à décharge, ledit circuit de pré-expansion étant apte à générer une préimpulsion électrique d'intensité I4, sous une tension V4, dans la lampe à décharge, après la génération de l'écoulement ionisé fin d'intensité I2 et avant la génération d'une ou plusieurs impulsions lumineuses principales dans la lampe à décharge, générant une préimpulsion lumineuse dans la lampe à décharge pendant une durée t4', la durée t4' de la préimpulsion lumineuse étant comprise entre les durées t2' et t3, la tension V4 étant comprise entre les tensions V2 et V3, et apte à permettre la formation d'un plasma préchauffé entre l'anode et la cathode de la lampe à décharge.

La préimpulsion permet de s'affranchir des fluctuations ou incertitudes temporelles entre la décharge électrique principale et l'impulsion lumineuse principale, c'est-à-dire entre l'ordre et son effet. Le plasma étant préchauffé, car il est déjà expansé, il est prêt à recevoir par commutation la décharge principale qui fournira l'impulsion lumineuse principale.

Le délai entre l'amorçage et le flash (ou « jitter ») de l'ensemble est réduit à quelques nano-secondes quelque soit la lampe à décharge utilisée.

Dans différents modes de réalisation possibles, la présente invention concerne également les caractéristiques suivantes qui pourront être considérées isolément ou selon toutes leurs combinaisons techniquement possibles et apportent chacune des avantages spécifiques :
- le circuit de pré-expansion comprend :
   o une alimentation variable apte à délivrer un courant d'intensité d'environ 400 milliampères sous une tension comprise entre 250 volts et 1000 volts, l'intensité I4 de la préimpulsion lumineuse étant comprise entre 50 ampères et 100 ampères,
   o un moyen de commutation monté en série avec l'alimentation du circuit de pré-expansion,
   o une diode de protection montée en série avec le moyen de commutation et l'alimentation du circuit de pré-expansion, ladite diode de protection étant apte à empêcher le retour de l'énergie électrique vers l'alimentation du circuit de pré-expansion,
- le générateur de flashs lumineux comprend un circuit de veille relié entre l'anode et la cathode de la lampe à décharge, ledit circuit de veille étant apte à fournir une tension de veille V5 et un courant de veille I5 à la lampe à décharge de façon continue, lorsque le courant I2 est coupé, générant un écoulement ionique très fin entre l'anode et la cathode de la lampe à décharge, la tension V5 et l'intensité I5 étant inférieures à la tension V2 et à l'intensité I2 respectivement,
- le circuit de veille comprend :
   o une alimentation apte à permettre au circuit de veille de délivrer le courant d'intensité I5 sous la tension V5, la tension de veille V5 et l'intensité de veille I5 pouvant atteindre jusqu'à 3000 volts et 15 milliampères respectivement,
   o un moyen de commutation monté en série avec l'alimentation du circuit de veille,
   o une diode de protection montée en série avec le moyen de commutation et l'alimentation du circuit de veille, ladite diode de protection étant apte à empêcher le retour de l'énergie électrique vers l'alimentation du circuit de veille,
- le circuit de décharge principale comprend :
   o une alimentation principale apte à permettre au circuit de décharge principale de délivrer de l'énergie électrique sous le courant d'intensité I3 et la tension V3, l'intensité 13 et la tension V3 étant d'environ 10 kA et 5 kV respectivement,
   o une ligne à décharge montée en parallèle avec l'alimentation principale et la lampe à décharge, ladite ligne à décharge étant composée d'une série d'éléments inductifs et capacitifs, et étant apte à stocker l'énergie électrique fournie par l'alimentation principale et à la décharger dans la lampe à décharge,
   o un moyen de commutation monté en série avec la ligne à décharge et la lampe à décharge, ledit moyen de commutation étant apte à bloquer ou à rendre passant l'énergie électrique stockée dans la ligne à décharge,
   o une diode de protection montée en série avec la lampe à décharge, la ligne à décharge et le moyen de commutation, ladite diode de protection étant apte à empêcher le retour de l'énergie électrique vers la ligne à décharge,
- le circuit d'alimentation en continu comprend :
   o une alimentation apte à délivrer un courant d'intensité d'environ 60 milliampères sous une tension comprise entre 500 volts et 3000 volts, l'intensité I2 entre l'anode et la cathode de la lampe à décharge étant de quelques dizaines de milliampères,
   o une résistance montée en série avec l'alimentation du circuit d'alimentation en continu,
- le générateur de flashs lumineux comprend un moyen de synchronisation tel un circuit programmable,
- le circuit de décharge principale comprend des éléments selfiques,
- les moyens de commutation des différents circuits sont des commutateurs à l'état solide.

L'invention concerne également un procédé de génération de flashs lumineux par un générateur de flashs lumineux comprenant une lampe à décharge comportant trois électrodes dont une anode, une cathode et une électrode d'amorçage, ladite lampe à décharge étant apte à recevoir des impulsions électriques et à générer des impulsions lumineuses, ledit procédé comprenant :
- une étape consistant à délivrer une tension V2 entre l'anode et la cathode de la lampe à décharge, pendant une durée t2,
- une étape de génération d'une impulsion électrique d'amorçage d'intensité I1 et de tension V1 sur l'électrode d'amorçage de la lampe à décharge, générant entre autre, un peu avant et un peu après les flashs lumineux, un écoulement ionisé fin d'intensité I2, entre l'anode et la cathode, pendant une durée t2',
- une étape de stockage de l'énergie électrique nécessaire pour générer une ou plusieurs décharges électriques d'intensité 13, sous une tension V3, dans la lampe à décharge,
- une étape de décharge de ladite énergie électrique nécessaire pour générer une ou plusieurs décharges électriques dans la lampe à décharge, produisant une impulsion lumineuse ou une série d'impulsions lumineuses principales pendant une durée t3, inférieure à la durée t2', l'intensité I3 et la tension V3 étant supérieures à l'intensité I2 et à la tension V2 respectivement.

Selon l'invention, le procédé de génération de flashs lumineux comprend :
- une étape de génération d'une préimpulsion électrique d'intensité 14, sous une tension V4, dans la lampe à décharge, après la génération de l'écoulement ionisé fin d'intensité I2, après établissement du régime Simmer, et avant la génération d'une ou plusieurs impulsions lumineuses principales dans la lampe à décharge, générant une préimpulsion lumineuse dans la lampe à décharge pendant une durée t4', la durée t4' de la préimpulsion lumineuse étant comprise entre les durées t2' et t3, la tension V4 étant comprise entre les tensions V2 et V3, et apte à permettre la formation d'un plasma préchauffé entre l'anode et la cathode de la lampe à décharge.

On obtient ainsi un générateur de flashs lumineux générant des impulsions lumineuses de haute puissance et ayant chacune un temps de montée rapide, inférieur à 2 microsecondes. Les impulsions lumineuses générées ont également une reproductibilité dans le temps et en énergie très élevée et peuvent être délivrées à des fréquences allant jusqu'à 50 Hz, voire 100 Hz.

Ce générateur de flashs lumineux génère tous les signaux nécessaires à l'obtention de flashs lumineux pour tous modèles de lampes à gaz de structures et de formes diverses.

Le générateur de flashs lumineux génère des impulsions lumineuses ayant un plateau de lumière stable et reproductible en durée, d'énergie spécifiée.

La fréquence de récurrence, tout en tenant compte de l'énergie admissible du tube utilisé peut varier du coup unique jusqu'à 125 hertz, voire jusqu'à 1 Khz.

Le générateur de flashs lumineux procure d'autres avantages. La durée de vie des lampes flashs est prolongée d'un facteur 1000 par rapport aux lampes flashs de l'art antérieur, avec pour conséquence une fidélité spectrale plus étendue dans le temps.

Le temps de réponse du générateur de flashs lumineux est d'une extrême précision.

Une grande économie d'énergie est réalisée et la zone utile de l'impulsion lumineuse est plus rapidement atteinte et plus rapidement quittée.

Le temps de montée de l'impulsion lumineuse est plus rapide pour atteindre l'intensité maximale (environ 1,5 microsecondes).

Le générateur de flashs lumineux produit des impulsions lumineuses stables et calibrées dans le temps.

L'intensité maximale est doublée par rapport à l'intensité maximale obtenue avec des générateurs de flashs lumineux de l'art antérieur.

L'invention concerne également un spectromètre d'absorption comprenant une caméra à balayage de fente.

Selon l'invention, le spectromètre d'absorption comprend un générateur de flashs lumineux tel que défini précédemment.

Un tel spectrophotomètre d'absorption optique permet de détecter des variations de lumière avec une résolution temporelle allant jusqu'à 3,7 picosecondes. Le temps de montée de chaque flashs est très court (au moins inférieur à 2 microsecondes), ce qui permet de ne pas saturer le photodétecteur avant la mesure de l'absorption. Dans de telles conditions, il est alors possible d'enregistrer, avec la caméra à balayage de fente, l'évolution des spectres d'absorption dans un milieu, en fonction du temps, depuis le domaine de la picoseconde, jusqu'à la microseconde voir la milliseconde.

Avec un tel spectromètre, il est possible d'enregistrer, avec une résolution temporelle allant jusqu'à 3,7 picosecondes, les spectres d'absorption transitoires d'espèces chimiques instables, produites par le passage d'un faisceau d'électrons dans des échantillons, ainsi que l'évolution avec le temps de ces spectres à toutes les longueurs d'onde.

L'utilisation du générateur de flashs lumineux, selon l'invention apporte un gain de temps considérable dans la collecte des résultats, mais aussi une économie sur le fonctionnement des différents appareillages dont ceux produisant et accélérant les électrons, et enfin la possibilité d'étudier des systèmes biologiques qui ne supportent pas de trop grande dose d'irradiation.

L'invention sera décrite plus en détail en référence aux dessins annexés dans lesquels :
- La figure 1 représente un générateur de flashs lumineux, de l'art antérieur, apte à fonctionner en mode « Simmer » ;
- La figure 2 représente un générateur de flashs lumineux, selon un mode de réalisation de l'invention ;
- La figure 3 représente les intensités des différents signaux lumineux en fonction du temps pour un générateur de flashs lumineux ayant un circuit de veille ;
- La figure 4 représente les intensités des différents signaux lumineux en fonction du temps pour un générateur de flashs lumineux sans circuit de veille ;
- La figure 5 représente une succession de flashs lumineux pour un générateur de flashs lumineux sans circuit de veille.

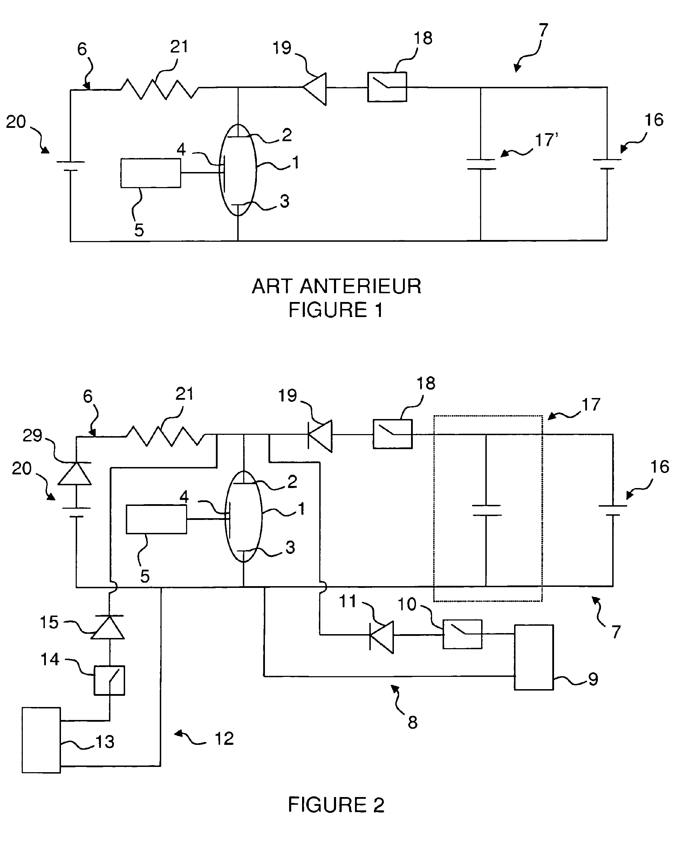

La figure 1 représente un générateur de flashs lumineux de l'art antérieur, apte à fonctionner en mode « Simmer ». Ce générateur de flashs lumineux comprend une lampe à décharge 1, apte à recevoir des impulsions électriques générées par les différents circuits électriques du générateur de flashs lumineux et à générer des impulsions lumineuses. La lampe à décharge 1 comporte trois électrodes 2, 3, 4 dont une anode 2, une cathode 3 et une électrode d'amorçage 4.

Le générateur de flashs lumineux de la figure 1 comprend également un circuit d'alimentation en continu 6 de la lampe à décharge, également nommé circuit « Simmer ». Ce circuit d'alimentation en continu 6 est apte à fournir de façon continue pendant une durée t2, une tension V2 entre l'anode 2 et la cathode 3 de la lampe à décharge 1.

Le générateur de flashs lumineux comprend également un circuit d'amorçage 5 de la lampe à décharge apte à fournir une impulsion électrique d'amorçage 5' d'intensité I1 d'environ 200 mA, et de tension V1 de grande amplitude (de l'ordre de 25 kV) sur l'électrode d'amorçage 4 de la lampe à décharge. La génération de l'impulsion électrique d'amorçage 5' permet le passage d'un écoulement ionisé fin 25 entre l'anode 2 et la cathode 3 de la lampe à décharge 1 sous une intensité I2, un peu avant et un peu après les flashs lumineux, pendant une durée t2'. On entend par « écoulement ionisé fin », un flux d'ions de faible section, sous une faible intensité I2.

Le circuit d'alimentation en continu 6 comprend une alimentation 20 apte à délivrer un courant d'intensité d'environ 60 milliampères sous une tension V2 comprise entre 500 volts et 3000 volts. L'intensité I2 entre l'anode 2 et la cathode 3 de la lampe à décharge 1 est de quelques dizaines de milliampères.

Le circuit d'alimentation en continu 6 peut comprendre une résistance 21 montée en série avec l'alimentation du circuit d'alimentation en continu 20.

La tension d'alimentation V2 étant déja présente sur l'anode 2 et la cathode 3 de la lampe à décharge 1, le circuit d'amorçage 5 est capable de produire une impulsion haute tension V1 de 25 kV en un temps d'environ 10 microsecondes, sur l'électrode d'amorçage 4 de la lampe à décharge 1. L'ordre d'amorçage qui commande cette impulsion haute tension peut s'effectuer manuellement sur un boitier d'alimentation même, ou bien à distance, en logique standart, associé à une interface isolé galvaniquement à 40 kV.

Le circuit d'alimentation en continu 6 comprend une alimentation 20 séparée avec des caractéristiques de charge spécifiques, conçue pour que le courant continue de s'écouler dans la lampe à décharge 1 dans un état faible mais stable d'ionisation.

Le circuit d'alimentation en continu 6 peut comprendre une diode de protection 29 montée en série avec la lampe à décharge 1, et la résistance 21. La diode de protection 29 est apte à empêcher le retour de l'énergie électrique vers l'alimentation 20.

En mode « Simmer », la lampe à décharge 1 n'a besoin d'être déclenchée qu'une seule fois lors d'une séquence de flashs.

Selon le type de lampe à décharge, le courant « Simmer » I2 typique peut être de quelques dizaines de milliampères jusqu'à plusieurs ampères. La tension V2 aux bornes de la lampe à décharge 1 peut être comprise entre 500 volts et 3000 volts.

Le générateur de flashs lumineux de la figure 1 comprend également un circuit de décharge principale 7 relié entre l'anode 2 et la cathode 3 de la lampe à décharge 1. Ce circuit de décharge principale 7 est apte à stocker et à décharger l'énergie électrique nécessaire pour générer une ou plusieurs décharges électriques d'intensité I3, sous une tension V3, dans la lampe à décharge 1, produisant une impulsion lumineuse principales 26 ou une série d'impulsions lumineuses principales 26. Une impulsion lumineuse principale 26 ou une série d'impulsions lumineuses principales 26 est générée pendant une durée t3, qui est inférieure à la durée t2' de fonctionnement en mode « Simmer ». Quant à l'intensité I3 et la tension V3, elles sont supérieures à l'intensité 12 et à la tension V2 respectivement.

La durée d'une impulsion lumineuse principale 26 dans un générateur de flashs lumineux de l'art antérieur est d'environ 5 à 6 microsecondes.

Le circuit de décharge principale 7 du générateur de flashs lumineux comprend une alimentation principale 16 apte à délivrer de l'énergie électrique sous le courant d'intensité I3 et la tension V3. L'intensité I3 et la tension V3 sont supérieures à l'intensité 12 et à la tension V2 respectivement.

Le circuit de décharge principale 7 du générateur de flashs lumineux comprend également une capacité 17' montée en parallèle avec l'alimentation principale 16 et la lampe à décharge 1. La capacité 17' est apte à stocker l'énergie électrique fournie par l'alimentation principale 16 et à la décharger dans la lampe à décharge 1. L'évolution de l'intensité de l'énergie lumineuse au cours du temps suit l'intensité délivrée par la capacité 17', lors de la décharge de cette dernière.

Le circuit de décharge principale 7 du générateur de flashs lumineux comprend un moyen de commutation 18 monté en série avec la capacité 17' et la lampe à décharge 1. Le moyen de commutation 18 est apte à bloquer ou à rendre passant l'énergie électrique stockée dans la capacité 17'.

Le circuit de décharge principale 7 du générateur de flashs lumineux comprend une diode de protection 19 montée en série avec la lampe à décharge 1, la capacité 17' et le moyen de commutation 18. La diode de protection 19 est apte à empêcher le retour de l'énergie électrique vers la capacité 17'.

La figure 2 représente un générateur de flashs lumineux, selon un exemple de mode de réalisation de l'invention.

Le générateur de flashs lumineux de la figure 2 comprend les éléments décrits ci-dessus, avec d'autres caractéristiques décrites ci-dessous.

Le circuit de décharge principale 7 peut comprendre un circuit de mise en forme du type capacitif et selfique. Le circuit de mise en forme peut être un circuit de mise en forme haute tension. L'utilisation de circuits de mise en forme haute tension permet de créer des impulsions lumineuses calibrées et très reproductibles.

Le moyen de commutation 18 du circuit de décharge principale 7 est mis sous une tension V3 d'environ 5 kV à l'état bloqué et une intensité I3 d'environ 10 kA à l'état passant. Il est commandé en logique standart via un interface isolé galvaniquement à environ 15 kV en continu.

L'énergie de la décharge principale peut être stockée dans un condensateur 17' ou une ligne à décharge 17, et chargée par l'alimentation principale 16 séparée. Ensuite, l'énergie de la décharge principale peut être commutée dans la lampe à décharge 1. Le moyen de commutation 18 peut être un thyristor, ou préférentiellement un commutateur semiconducteur. Le gaz dans la lampe à décharge 1 devient hautement plus ionisé, produisant un flash quand l'énergie se dissipe. Le gaz est alors forcé de retourner à l'état « Simmer ».

Néanmoins, pendant le fonctionnement en régime « Simmer », la lampe à décharge 1 a un comportement proche des plasmas froids. Un courant imposé plus fort est lent à s'établir.

Le délai entre l'amorçage et le flash ou « jitter » est alors important. Il est le plus souvent compris entre 200 ns et 5 µs, suivant le type de lampe à décharge. Et dans le cas de commutateurs classiques, il est de l'ordre de 100 à 200 ns.

Pour réduire ce délai, selon le mode de réalisation de l'invention, représenté sur la figure 2, le générateur de flashs lumineux comprend, en plus, un circuit de pré-expansion 8 relié entre l'anode 2 et la cathode 3 de la lampe à décharge 1. Le circuit de pré-expansion 8 est apte à générer une préimpulsion électrique générant une préimpulsion lumineuse 27 dans la lampe à décharge 1 sous une tension V4, un courant d'intensité I4 et pendant une durée t4'. La tension V4 est comprise entre les tensions V2 et V3 et l'intensité I4 est comprise entre les intensités I2 et I3. Le circuit de pré-expansion 8 est alimenté pendant une durée t4 supérieure à la durée t4'.

La préimpulsion lumineuse 27 est générée après la génération de l'écoulement ionisé fin 25 d'intensité I2 (courant « Simmer ») et avant la génération d'une ou plusieurs impulsions lumineuses principales 26 dans la lampe à décharge 1.

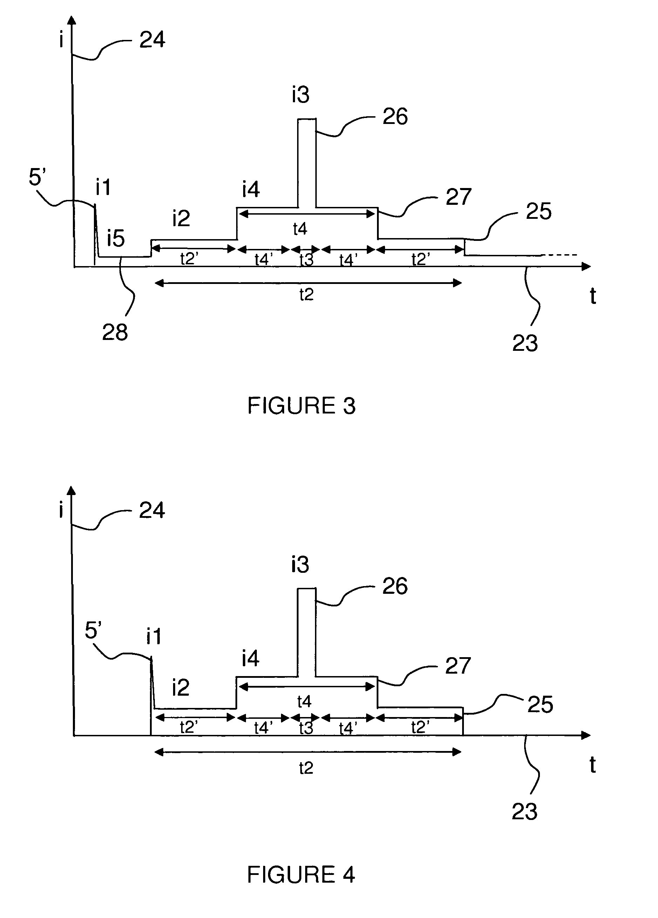

La préimpulsion lumineuse 27 peut également continuer à être générée après la génération des impulsions lumineuses principales 26 pendant une durée équivalente à la durée t4', comme représenté sur la figure 3.

Pendant la génération des préimpulsions lumineuses 27, le courant d'intensité I2 délivré par le circuit d'alimentation en continu 6 est bloqué par la diode 29 et par le fait que la tension V4 est supérieure à la tension V2.

Pendant la génération des impulsions lumineuses principales 26, le courant d'intensité 14 est bloqué par la diode 11 et par le fait que la tension V3 est supérieure à la tension V4.

La figure 4 représente les intensités des différentes impulsions lumineuses en fonction du temps (les échelles ne sont pas respectées).

Les abscisses 23 représentent le temps et les ordonnées 24 représentent l'intensité des impulsions lumineuses.

La durée t4 pendant laquelle le circuit de pré-expansion 8 est sous tension est comprise entre la durée t2 pendant laquelle le circuit d'alimentation en continu 6 est sous tension, et la durée t3, pendant laquelle une impulsion lumineuse 26 ou une série d'impulsions lumineuses principales 26 est générée.

Pendant la durée t2, l'écoulement ionisé fin 25 entre l'anode 2 et la cathode 3 de la lampe à décharge 1 est généré une seconde avant et une seconde après la préimpulsion lumineuse 27 de durée t4'.

La durée t3 d'impulsions lumineuses principales 26, pendant laquelle une impulsion lumineuse principale 26 ou une série d'impulsions lumineuses principales 26 est générée peut être comprise entre 4 µs et 500 µs (extensible). Chaque flash ou impulsion lumineuse principale 26 peut avoir un temps de montée rapide, inférieur à 2 microsecondes.

La durée d'une impulsion lumineuse principale 26 dans un générateur de flashs lumineux de l'art antérieur est d'environ 5 à 6 microsecondes.

La durée d'une impulsion lumineuse principale 26 dans un générateur de flashs lumineux selon l'invention est d'environ 4 µs à 500 µs.

Le nombre d'impulsions lumineuses principales 26 peut être programmé de 1 à 100 000 coups par séquence.

La durée t4', pendant laquelle la préimpulsion lumineuse 27 est générée, dépend du nombre d'impulsions lumineuses principales 26.

La position dans le temps des impulsions lumineuses principales 26 par rapport à la préimpulsion lumineuse 27 est importante. La position optimale entre 70 µs et 80 µs de la décharge par rapport à la préimpulsion lumineuse 27, trouvée expérimentalement, donne un temps de montée de l'impulsion lumineuse principale 26 deux fois plus bref et une amplitude deux fois plus grande par rapport aux temps de montée et amplitudes des impulsions lumineuses de l'art antérieur.

Le mode « Simmer » est mis en service environ une seconde avant la mise en service du mode en « pré-expansion ». Le mode « Simmer » reste activé 1 s après la durée t4', c'est-à-dire après le mode en « pré-expansion ». Pendant la durée t4', la préimpulsion lumineuse 27 peut varier entre 70 µs et 80 µs avant et après la durée t3.

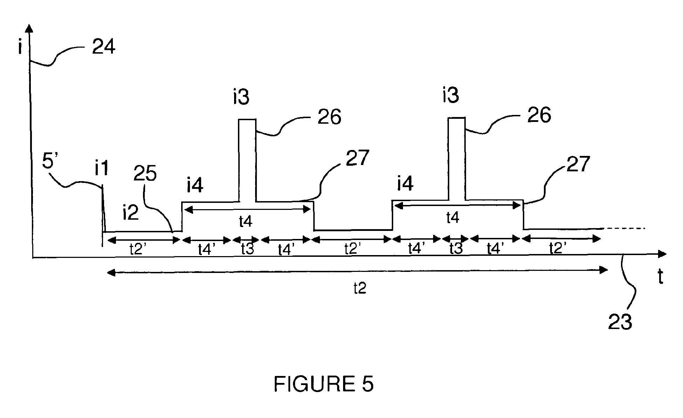

Comme illustré sur la figure 5, plusieurs flashs lumineux peuvent être générés pendant la durée t2, c'est-à-dire pendant que le circuit d'alimentation en continu 6 alimente la lampe à décharge 1, en vu du fonctionnement en régime « Simmer » entre les préimpulsions lumineuses 27. Avant et après chaque flash lumineux, le circuit de pré-expansion 8 est alimenté par le courant 14 pour permettre la formation d'un plasma préchauffé entre l'anode 2 et la cathode 3 de la lampe à décharge 1.

Le circuit de pré-expansion 8 comprend une alimentation 9 apte à délivrer le courant d'intensité d'environ 400 milliampères sous une tension V4 comprise entre 250 volts et 1000 volts. L'intensité 14 de la préimpulsion lumineuse 27 est comprise entre 50 ampères et 100 ampères, de préférence égale à 80 ampères.

Le circuit de pré-expansion 8 comprend un moyen de commutation 10 monté en série avec l'alimentation 9 du circuit de pré-expansion et une diode de protection 11 montée en série avec le moyen de commutation 10 et l'alimentation 9 du circuit de pré-expansion. La diode de protection 11 est apte à empêcher le retour de l'énergie électrique vers l'alimentation 9 du circuit de pré-expansion.

La préimpulsion lumineuse 27 générée par le circuit de pré-expansion 8 aide à s'affranchir des fluctuations temporelles et à réduire le délai entre l'amorçage et le flash ou la série de flashs. Le plasma est préchauffé car il est déjà expansé. Il est alors prêt à recevoir par commutation du moyen de commutation 18 du circuit de décharge principale 7, la décharge principale qui fournira l'impulsion lumineuse principale 26.

Celle-ci est obtenue à l'aide d'une ligne à décharge 17 du circuit de décharge principale 7 qui remplace le condensateur ou capacité 17' de l'art antérieur (figure 1). La ligne à décharge 17 qui est composée d'une série d'éléments inductifs et capacitifs permet d'ajuster la durée de l'impulsion lumineuse, pour fournir une tension comprise entre 3 KV et 6 KV, de préférence 5 KV et une énergie électrique allant jusqu'à 5 KJ/s, sous une intensité d'environ 2000 ampères

La ligne à décharge 17 permet d'obtenir une montée de l'intensité de l'impulsion lumineuse principale 26 jusqu'à sa valeur maximale, plus rapide. Après avoir atteint sa valeur maximale, l'intensité de l'impulsion lumineuse principale 26 baisse également plus rapidement. La forme idéale carré de l'impulsion lumineuse principale 26 est représentée sur la figure 3.

La ligne à décharge 17 permet d'obtenir une durée d'impulsion lumineuse principale d'environ 4 à 500 µs extensible.

Le délai entre l'amorçage et le flash (ou « jitter ») de l'ensemble est réduit à quelques nano-secondes quelque soit la lampe à décharge 1 utilisée. L'utilisation d'une préimpulsion lumineuse 27 permet de réduire, voire éliminer, l'incertitude entre la décharge électrique principale et l'impulsion lumineuse principale 26. Le régime transitoire entre ces derniers est contrôlé par le maintient d'un courant ionisé, entre l'anode 2 et la cathode 3 de la lampe à décharge 1, d'intensité plus importante que celle du courant ionisé en régime « Simmer ». Le comportement du plasma se rapproche de celui d'un plasma chaud, plus stable.

Dans un autre mode de réalisation de l'invention possible, le générateur de flashs lumineux comprend également un circuit de veille 12 relié entre l'anode 2 et la cathode 3 de la lampe à décharge 1. Il est capable de fournir une tension de veille V5 et un courant de veille 15 à la lampe à décharge 1 de façon continue. La tension V5 et l'intensité I5 sont inférieures à la tension V2 et à l'intensité 12 respectivement.

Le circuit de veille 12 comprend une alimentation 13 apte à permettre au circuit de veille 12 de délivrer le courant d'intensité I5 sous la tension V5. La tension de veille V5 et l'intensité de veille 15 peuvent atteindre jusqu'à 3000 volts et 15 milliampères respectivement.

Le circuit de veille 12 comprend un moyen de commutation 14 monté en série avec l'alimentation du circuit de veille 13, et une diode de protection 15 montée en série avec le moyen de commutation 14 et l'alimentation du circuit de veille 13. La diode de protection 15 est capable d'empêcher le retour de l'énergie électrique vers l'alimentation du circuit de veille 13.

La figure 3 représente les intensités des différents signaux lumineux en fonction du temps pour un générateur de flashs lumineux ayant un circuit de veille 12.

La lampe à décharge 1 est alimentée en continu. Un très fin écoulement ionique 28 est alors généré entre l'anode 2 et la cathode 3 de la lampe à décharge 1. L'énergie électrique nécessaire pour maintenir ce très fin écoulement ionique 28 est moins importante que celle qui est nécessaire à maintenir l'écoulement ionique 25 en mode « Simmer ». La lampe à décharge 1 est alimentée en continu par le circuit de veille 12 avant, après le fonctionnement en mode « Simmer » et pendant toute la durée de l'application.

Le fonctionnement en mode veille permet d'entretenir un plasma ayant un comportement proche des plasmas froids et participe à augmenter la longévité de la lampe à décharge 1.

Comme représenté sur la figure 3, le très fin écoulement ionique 28 est amorcé par le circuit d'amorçage 5 de la lampe à décharge 1 qui fournit une impulsion électrique d'amorçage 5'.

Une seule impulsion électrique d'amorçage 5' suffit pour toute la durée de fonctionnement de la lampe flash.

Pendant le fonctionnement en mode veille, le courant 12 est coupé, ainsi que les courants I4 et I3.

Par exemple, il peut s'écouler trois jours entre deux flashs lumineux. Le fonctionnement en mode veille est alors activé entre ces deux flashs lumineux.

Le générateur de flashs lumineux est pourvu d'un moyen de synchronisation par un circuit programmable qui permet de positionner dans le temps, de façon très précise, l'impulsion lumineuse principale 26 par rapport à un ordre de niveau logique standard extérieur.

Il est possible de commander localement ou à distance les flashs lumineux 26 et de les synchroniser sur des dispositifs externes (systèmes électro-optiques tels que obturateurs, caméra à balayage de fente, analyseur optique multicanaux, caméras hautes vitesses, etc...) avec un temps de réponse extrêmement précis et très stable.

L'ensemble est coordonné par le moyen de synchronisation qui fonctionne en logique standard et est réalisé par des circuits programmables FPGA (« Field Programmable Gate Array ») ou CPLD (« Complex Programmable Logic Device »).

Le moyen de synchronisation permet d'obtenir l'amorçage à distance de la lampe à décharge 1, le cadencement et la temporisation des signaux électriques délivrant les préimpulsions et les décharges électriques principales, le contrôle des tensions à distance, leur lecture, leur affichage.

Le moyen de synchronisation permet également d'obtenir les synchronisations externes, la sécurité de l'ensemble par détection de défauts comme les surcharges et les échauffements excessifs.

Le générateur de flashs lumineux peut comprendre des interfaces qui assurent la commande extérieure des divers appareils (caméras à balayage de fente, analyseur optique multicanaux, systèmes d'obturation, par exemple).

On obtient ainsi un générateur de flashs lumineux générant des impulsions lumineuses 26 de haute puissance et ayant chacune un temps de montée rapide, inférieur à 2 microsecondes. Les impulsions lumineuses 26 générées ont également une reproductibilité dans le temps et en énergie très élevée et peuvent être délivrées à des fréquences allant jusqu'à 50 Hz, voire 100 Hz.

Le générateur de flashs lumineux, selon l'invention, génère tous les signaux nécessaires à l'obtention de flashs lumineux pour tous modèles de lampes à gaz de structures et de formes diverses.

Le générateur de flashs lumineux génère des impulsions lumineuses 26 ayant un plateau de lumière stable et reproductible en durée, d'énergie spécifiée.

Le nombre d'impulsions lumineuses 26 dans une série d'impulsions lumineuses 26 (ou la durée t3) dépend des paramètres imposés par l'utilisateur dans son domaine d'application qui sont : le nombre d'impulsions lumineuses par seconde, leur durée, la fréquence de répétition, l'énergie, la puissance.

La fréquence de récurrence, tout en tenant compte de l'énergie admissible du tube utilisé peut varier du coup unique jusqu'à 125 hertz, voire jusqu'à 1 Khz.

Le générateur de flashs lumineux procure d'autres avantages. La durée de vie des lampes flashs est prolongée d'un facteur 1000 par rapport aux lampes flashs de l'art antérieur, avec pour conséquence une fidélité spectrale plus étendue dans le temps.

Le temps de réponse du générateur de flashs lumineux est d'une extrême précision.

Une grande économie d'énergie est réalisée et la zone utile de l'impulsion lumineuse est plus rapidement atteinte et plus rapidement quittée.

Le temps de montée de l'impulsion lumineuse est plus rapide pour atteindre l'intensité maximale (environ 1,5 microsecondes).

Le générateur de flashs lumineux produit des impulsions lumineuses stables et calibrées dans le temps.

On obtient une intensité maximale doublée par rapport à l'intensité maximale obtenue avec des générateurs de flashs lumineux de l'art antérieur.

Le générateur de flashs lumineux est conçu suivant la stricte observance des règles de construction de compatibilité électromagnétique. Il est apte à fonctionner en milieu perturbé (laser pulsé, accélérateur) et il ne produit pas de parasites.

La lampe à décharge utilisée dans le générateur de flashs lumineux peut être une lampe à décharge au xénon, krypton ou autre.

L'invention concerne également un spectrophotomètre d'absorption optique comprenant un tel générateur de flashs lumineux.

Le générateur de flashs lumineux, selon l'invention, est destiné à servir de lumière d'analyse pour des mesures de spectrophotométrie d'absorption optique dont le détecteur est une caméra à balayage de fente (« streak-camera »). Le spectrophotomètre d'absorption optique permet de détecter des variations de lumière avec une résolution temporelle allant jusqu'à 3,7 picosecondes. Le temps de montée de chaque flashs est très court (au moins inférieur à 2 microsecondes), ce qui permet de ne pas saturer le photodétecteur avant la mesure de l'absorption. Dans de telles conditions, il est alors possible d'enregistrer, avec la caméra à balayage de fente, l'évolution des spectres d'absorption dans un milieu, en fonction du temps, depuis le domaine de la picoseconde, jusqu'à la microseconde voir la milliseconde.

Avec un tel spectromètre, il est possible d'enregistrer, avec une résolution temporelle allant jusqu'à 3,7 picosecondes, les spectres d'absorption transitoires d'espèces chimiques instables, produites par le passage d'un faisceau d'électrons dans des échantillons, ainsi que l'évolution avec le temps de ces spectres à toutes les longueurs d'onde.

Quant aux systèmes de mesure de l'art antérieur, ils ne permettent d'enregistrer soit qu'un seul spectre d'absorption à un temps donné, soit l'évolution du spectre avec le temps, mais à une seule longueur d'onde, par des méthodes de mesures point par point à des temps différents. Les mesures point par point à des temps différents sont ensuite recombinées pour obtenir une évolution temporelle du spectre complet.

Ces méthodes de l'art antérieur nécessitent un grand nombre d'irradiation des échantillons, ce qui dans certains cas leur est néfaste.

L'utilisation du générateur de flashs lumineux, selon l'invention apporte un gain de temps considérable dans la collecte des résultats, mais aussi une économie sur le fonctionnement des différents appareillages dont ceux produisant est accélérant les électrons, et enfin la possibilité d'étudier des systèmes biologiques qui ne supportent pas de trop grande dose d'irradiation.

Le générateur de flashs lumineux, selon l'invention, peut également être utilisé dans d'autres domaines comme par exemple la radiolyse pulsée, la conception des lasers (pompage du milieu amplificateur précis), la photographie, la stroboscopie, la signalisation fixe ou embarquée, la reprographie, le traitement de la peau, la décontamination UVLASER pulsé, le dosage radio-immunologique, les photomètres de fluorescence, les spectroradiomètres, les chromatographes en phase liquide ou gazeuse, les colorimètres et les applications en ultraviolet.

## Revendications

1. Générateur de flashs lumineux **caractérisé en ce qu'**il comprend :
- une lampe à décharge haute pression (1), apte à recevoir des impulsions électriques et à générer des impulsions lumineuses, et comportant trois électrodes (2, 3, 4) dont une anode (2), une cathode (3) et une électrode d'amorçage (4),
- un circuit d'alimentation en continu (6) de la lampe à décharge apte à produire une tension V2 et un courant d'intensité I2, entre l'anode (2) et la cathode (3), pendant une durée t2,
- un circuit d'amorçage (5) de la lampe à décharge (1) apte à fournir une impulsion électrique d'amorçage (5') d'intensité I1 et de tension V1 sur l'électrode d'amorçage (4) de la lampe à décharge, générant entre autre, un peu avant et un peu après les flashs lumineux, un écoulement ionisé fin (25) d'intensité I2, entre l'anode (2) et la cathode (3), pendant une durée t2',
- un circuit de pré-expansion (8) relié entre l'anode (2) et la cathode (3) de la lampe à décharge (1), ledit circuit de pré-expansion (8) étant apte à générer une préimpulsion électrique d'intensité I4, sous une tension V4, dans la lampe à décharge (1), après la génération de l'écoulement ionisé fin (25) d'intensité I2, et avant la génération d'une ou plusieurs impulsions lumineuses principales (26) dans la lampe à décharge (1), générant une préimpulsion lumineuse (27) dans la lampe à décharge (1) pendant une durée t4', la durée t4' de la préimpulsion lumineuse (27) étant comprise entre les durées t2' et t3, l'intensité I4 étant comprise entre les intensités 12 et 13, la tension V4 étant inférieure à la tension V3, et supérieure à la tension V2, de façon à bloquer le courant 12, et choisie de façon à permettre la formation d'un plasma préchauffé entre l'anode (2) et la cathode (3) de la lampe à décharge (1),
- un circuit de décharge principale (7) relié entre l'anode (2) et la cathode (3) de la lampe à décharge (1), ledit circuit de décharge principale (7) étant apte à stocker et à décharger l'énergie électrique nécessaire pour générer une ou plusieurs décharges électriques d'intensité I3, sous une tension V3, dans la lampe à décharge (1), produisant une impulsion lumineuse ou une série d'impulsions lumineuses principales (26) pendant une durée t3 inférieure à la durée t2', l'intensité 13 étant supérieure à l'intensité I2 et la tension V3 étant supérieure à la tension V4, de façon à bloquer le courant 14, la préimpulsion électrique continuant à être générée dans la lampe à décharge (1) après la fin des impulsions lumineuses principales (26), et l'écoulement ionisé fin (25) continuant à être généré dans la lampe à décharge (1) après la fin de la préimpulsion électrique.

2. Générateur de flashs lumineux selon la revendication 1, **caractérisé en ce que** le circuit de pré-expansion (8) comprend :
- une alimentation (9) variable apte à délivrer un courant d'intensité d'environ 400 milliampères sous une tension comprise entre 250 volts et 1000 volts, l'intensité 14 de la préimpulsion lumineuse (27) étant comprise entre 50 ampères et 100 ampères, de préférence égale à 80 ampères,
- un moyen de commutation (10) monté en série avec l'alimentation (9) du circuit de pré-expansion,
- une diode de protection (11) montée en série avec le moyen de commutation (10) et l'alimentation (9) du circuit de pré-expansion, ladite diode de protection (11) étant apte à empêcher le retour de l'énergie électrique vers l'alimentation (9) du circuit de pré-expansion.

3. Générateur de flashs lumineux selon l'une quelconque des revendications 1 ou 2, **caractérisé en ce qu'**il comprend un circuit de veille (12) relié entre l'anode (2) et la cathode (3) de la lampe à décharge (1), ledit circuit de veille (12) étant apte à fournir une tension de veille V5 et un courant de veille I5 à la lampe à décharge (1) de façon continue, lorsque le courant 12 est coupé, générant un écoulement ionique (28) très fin entre l'anode (2) et la cathode (3) de la lampe à décharge (1), la tension V5 et l'intensité I5 étant inférieures à la tension V2 et à l'intensité 12 respectivement.

4. Générateur de flashs lumineux selon la revendication 3, **caractérisé en ce que** le circuit de veille (12) comprend :
- une alimentation (13) apte à permettre au circuit de veille (12) de délivrer le courant d'intensité I5 sous la tension V5, la tension de veille V5 et l'intensité de veille 15 pouvant atteindre jusqu'à 3000 volts et 15 milliampères respectivement,
- un moyen de commutation (14) monté en série avec l'alimentation du circuit de veille (13),
- une diode de protection (15) montée en série avec le moyen de commutation (14) et l'alimentation du circuit de veille (13), ladite diode de protection (15) étant apte à empêcher le retour de l'énergie électrique vers l'alimentation du circuit de veille (13).

5. Générateur de flashs lumineux selon l'une quelconque des revendications 1 à 4, **caractérisé en ce que** le circuit de décharge principale (7) comprend :
- une alimentation principale (16) apte à permettre au circuit de décharge principale (7) de délivrer de l'énergie électrique sous le courant d'intensité I3 et la tension V3, l'intensité I3 et la tension V3 étant d'environ 10 kA et 5 kV respectivement,
- une ligne à décharge (17) montée en parallèle avec l'alimentation principale (16) et la lampe à décharge (1), ladite ligne à décharge (17) étant composée d'une série d'éléments inductifs et capacitifs, et apte à stocker l'énergie électrique fournie par l'alimentation principale (16) et à la décharger dans la lampe à décharge (1),
- un moyen de commutation (18) monté en série avec la ligne à décharge (17) et la lampe à décharge (1), ledit moyen de commutation (18) étant apte à bloquer ou à rendre passant l'énergie électrique stockée dans la ligne à décharge (17),
- une diode de protection (19) montée en série avec la lampe à décharge (1), la ligne à décharge (17) et le moyen de commutation (18), ladite diode de protection (19) étant apte à empêcher le retour de l'énergie électrique vers la ligne à décharge (17).

6. Générateur de flashs lumineux selon l'une quelconque des revendications 1 à 5, **caractérisé en ce que** le circuit d'alimentation en continu (6) comprend :
- une alimentation (20) apte à délivrer un courant d'intensité d'environ 60 milliampères sous une tension comprise entre 500 volts et 3000 volts, l'intensité 12 entre l'anode (2) et la cathode (3) de la lampe à décharge (1) étant de quelques dizaines de milliampères,
- une résistance (21) montée en série avec l'alimentation du circuit d'alimentation en continu (20).

7. Générateur de flashs lumineux selon l'une quelconques des revendications 1 à 6, **caractérisé en ce qu'**il comprend un moyen de synchronisation tel un circuit programmable.

8. Générateur de flashs lumineux selon l'une quelconques des revendications 1 à 7, **caractérisé en ce que** le circuit de décharge principale (7) comprend des éléments selfiques.

9. Générateur de flashs lumineux selon l'une quelconques des revendications 1 à 8, **caractérisé en ce que** les moyens de commutation (10, 14, 18) des différents circuits (7, 8, 12) sont des commutateurs à l'état solide.

10. Spectromètre d'absorption comprenant une caméra à balayage de fente **caractérisé en ce qu'**il comprend un générateur de flashs lumineux tel que défini dans l'une quelconques des revendications 1 à 9.

11. Procédé de génération de flashs lumineux par un générateur de flashs lumineux comprenant une lampe à décharge haute pression (1) comportant trois électrodes (2, 3, 4) dont une anode (2), une cathode (3) et une électrode d'amorçage (4), ladite lampe à décharge (1) étant apte à recevoir des impulsions électriques et à générer des impulsions lumineuses, ledit procédé étant **caractérisé en ce qu'**il comprend :
- une étape consistant à délivrer une tension V2 entre l'anode (2) et la cathode (3) de la lampe à décharge (1), pendant une durée t2,
- une étape de génération d'une impulsion électrique d'amorçage (5') d'intensité I1 et de tension V1 sur l'électrode d'amorçage (4) de la lampe à décharge, générant entre autre, un peu avant et un peu après les flashs lumineux, un écoulement ionisé fin (25) d'intensité I2, entre l'anode (2) et la cathode (3), pendant une durée t2',
- une étape de stockage de l'énergie électrique nécessaire pour générer une ou plusieurs décharges électriques d'intensité 13, sous une tension V3, dans la lampe à décharge (1),
- une étape de génération d'une préimpulsion électrique d'intensité 14, sous une tension V4, dans la lampe à décharge (1), après la génération de l'écoulement ionisé fin (25) d'intensité I2, et avant la génération d'une ou plusieurs impulsions lumineuses principales (26) dans la lampe à décharge (1), générant une préimpulsion lumineuse (27) dans la lampe à décharge (1) pendant une durée t4', la durée t4' de la préimpulsion lumineuse (27) étant comprise entre les durées t2' et t3, l'intensité I4 étant comprise entre les intensités 12 et I3, la tension V4 étant inférieure à la tension V3, et supérieure à la tension V2 de façon à bloquer le courant I2, et choisie de façon à permettre la formation d'un plasma préchauffé entre l'anode (2) et la cathode (3) de la lampe à décharge (1),
- une étape de décharge de ladite énergie électrique nécessaire pour générer une ou plusieurs décharges électriques dans la lampe à décharge (1), produisant une impulsion lumineuse ou une série d'impulsions lumineuses principales (26) pendant une durée t3, inférieure à la durée t2', l'intensité 13 étant supérieure à l'intensité 12 et la tension V3 étant supérieure à la tension V4, de façon à bloquer le courant I4, la préimpulsion électrique continuant à être générée dans la lampe à décharge (1) après la fin des impulsions lumineuses principales (26), et l'écoulement ionisé fin (25) continuant à être généré dans la lampe à décharge (1) après la fin de la préimpulsion électrique.

## Claims

1. A light flash generator **characterized in that** it includes:
- a high-pressure discharge lamp (1), capable of receiving electric pulses and of generating light pulses, and comprising three electrodes (2, 3, 4), including one anode (2), on cathode (3) and one starting electrode (4),
- a continuous power supply circuit (6) for the discharge lamp, capable of producing a voltage V2 and a current of intensity I2, the anode (2) and the cathode (3), for a duration t2,
- a starting circuit (5) for the discharge lamp (1), capable of providing a starting electric pulse (5') of intensity I1 and voltage V1 on the starting electrode (4) of the discharge lamp, generating, among other things, slightly before and slightly the light flashes, a thin ion flow (25) of intensity I2, between the anode (2) and the cathode (3), for a duration t2',
- a pre-expansion circuit (8) connected between the anode (2) and the cathode (3) of the discharge lamp (1), said pre-expansion circuit (8) being capable of generating an electric pre-pulse of intensity I4, under a voltage V4, in the discharge lamp (1), after the generation of the thin ion flow (25) of of intensity I2, and before the generation of one or several main light pulses (26) in the discharge lamp (1), generating a light pre-pulse (27) in the discharge lamp (1) for a duration t4', the duration t4' of the light pre-pulse (27) being comprised the durations t2' and t3, the intensity I4 being comprised the intensities I2 and I3, the voltage V4 being lower than the voltage V3 and higher than the voltage V2, so as to block the current I2, and chosen so as to permit the formation of a pre-heated plasma between the anode (2) and the cathode (3) of the discharge lamp (1),
- a main discharge circuit (7) connected between the anode (2) and the cathode (3) of the discharge lamp (1), said main discharge circuit (7) being capable of storing and discharging the electric energy necessary for generating one or several electric discharges of intensity I3, under a voltage V3, in the discharge lamp (1), producing a light pulse or a series of main light pulses (26) for a duration t3 shorter than the duration t2', the intensity 13 being higher than the intensity I2 and the voltage V3 being higher than the voltage V4, so as to block the current I4, the electric pre-pulse continuing to be generated in the discharge lamp (1) after the end of the main light pulses (26), and the thin ion flow (25) continuing to be generated in the discharge lamp (1) after the end of the electric pre-pulse.

2. A light flash generator according to claim 1, **characterized in that** the pre-expansion circuit (8) includes:
- a variable power supply (9), capable of delivering a current with an intensity of about 400 milliamperes, under a voltage comprised between 250 volts and 1000 volts, the intensity I4 of the light pre-pulse (27) being comprised between 50 amperes and 100 amperes, preferably equal to 80 amperes,
- a switching means (10) mounted series with the power supply (9) of the pre-expansion circuit,
- a protection diode (11) mounted in series with the switching means (10) and the power supply (9) of the pre-expansion circuit, said protection diode (11) being capable of preventing the electric from returning toward the power supply (9) of the pre-expansion circuit.

3. A light flash generator according to any one of claims 1 or 2, **characterized in that** it includes a standby circuit (12) connected between the anode (2) and the cathode (3) of the discharge lamp (1), said standby circuit (12) in capable of providing in continuous a standby voltage V5 and a standby current I5 to the discharge lamp (1), when the current I2 is cut-off, generating a very thin ion flow (28) between the anode (2) and the cathode (3) of the discharge lamp (1), the voltage V5 and the intensity 15 being lower than the voltage V2 and the intensity I2, respectively.

4. A light flash generator according to claim 3, **characterized in that** the standby circuit (12) includes:
- a power supply (13) capable of allowing the standby circuit (12) to the current of intensity I5 under the voltage V5, the standby voltage V5 and the standby intensity I5 being to reach up to 3000 volts and 15 milliamperes, respectively,
- a switching means (14) mounted in series with the power supply of the standby circuit (13),
- a protection diode (15) mounted in series with the switching means (14) and the power supply of the standby circuit (13), said protection diode (15) being capable of preventing the electric energy from returning toward the power supply of the standby circuit (13).

5. A light flash generator according to any one of claims 1 to 4, **characterized in that** the main discharge circuit (7) includes:
- a main power supply (16) capable of allowing the main discharge circuit (7) to deliver an electric energy under the current of intensity I3 and the voltage V3, the intensity I3 and the voltage V3 being of about 10 kA and 5 KV, respectively,
- a discharge line (17) mounted in parallel with the main power supply (16) and the discharge lamp (1), said discharge line (17) being consisted of a series of inductive and capacitive and capable of storing the electric energy provided by the main power supply (16) and of discharging it in the discharge lamp (1),
- a switching means (18) mounted in series with the discharge line (17) and the discharge lamp (1), said switching means (18) being capable of blocking or releasing the electric energy stored in the discharge line (17),
- a protection diode (19) mounted in series with the discharge lamp (1), the discharge line (17) and the switching means (18), said protection diode (19) in capable of preventing the electric energy from returning toward the discharge line (17).

6. A light flash generator according to any of claims 1 to 5, **characterized in that** the continuous power supply circuit (6) includes:
- a power supply (20) capable of delivering a current with an intensity of about 60 milliamperes under a voltage comprised between 500 volts and 3000 volts, the intensity I2 between the anode (2) and the cathode (3) of the discharge lamp (1) being of a few tens of milliamperes,
- a resistor (21) mounted in series with the power supply of the continuous power supply circuit (20).

7. A light flash generator according to any one of claims 1 to 6, **characterized in that** it includes a synchronization means such as a programmable circuit.

8. A light flash generator according to any one of claims 1 to 7, **characterized in that** the main discharge circuit (7) includes inductive elements.

9. A light flash generator according to any one of claims 1 to 8, **characterized in that** the switching means (10, 14, 18) of the various circuits (7, 8, 12) are solid-state switches.

10. An absorption spectrometer including a strip scan camera **characterized in that** it includes a light flash generator as defined in any one of claims 1 to 9.

11. A method of generating light flashes by a light flash generator including a high-pressure discharge lamp (1) comprising three electrodes (2, 3, 4), including one anode (2), one cathode (3) and one starting electrode (4), said discharge lamp (1) being capable of receiving electric and of generating light pulses, said method being **characterized in that** it comprises:
- a step of delivering a voltage V2 between the anode (2) and the cathode (3) of the discharge lamp (1), for a duration t2,
- a step of generating a starting electric pulse (5') of intensity I1 and voltage V1 on the starting electrode (4) of the discharge lamp, generating, among other things, slightly before and slightly after the light flashes, a thin ion flow (25) of intensity I2, between the anode (2) and the cathode (3), for a duration t2',
- a step of storing the energy necessary for generating one or several electric discharges on intensity I3, under a voltage V3, in the discharge lamp (1),
- a step of generating an electric pre-pulse of intensity I4, under a voltage V4, in the discharge lamp (1), the generation of the thin ion flow (25) of intensity I2, and before the generation of one or several main light pulses (26) in the discharge lamp (1), generating a light pre-pulse (27) in the discharge lamp (1) for a duration t4', the duration t4' of the light pre-pulse (27) being comprised between the durations t2' and t3, the intensity I4 being comprised between the intensities I2 and I3, the voltage V4 being lower than the voltage V3 and higher than the voltage V2, so as to block the current 12, and chosen so as to permit the formation of a pre-heated plasma between the anode (2) and the cathode (3) of the discharge lamp (1),
- a step of discharging said electric energy necessary for generating one or several electric discharges in the discharge lamp (1), producing a light pulse or a series of main light pulses (26) for a duration t3 shorter than the duration t2', the intensity I3 being higher than the intensity I2 and the voltage V3 being higher than the voltage V4, so as to block the current I4, the electric pre-pulse continuing to be generated in the discharge lamp (1) after the end of the main light pulses (26), and the thin ion flow (25) continuing to be generated in the discharge lamp (1) after the end of the electric pre-pulse.

## Patentansprüche

1. Lichtblitzgenerator, **dadurch gekennzeichnet, dass** er folgendes umfasst:
- eine Hochdruckentladungslampe (1), die elektrische Impulse aufnehmen und Lichtimpulse erzeugen kann und drei Elektroden (2, 3, 4) umfasst, darunter eine Anode (2), eine Kathode (3) und eine Zündelektrode (4),
- eine Schaltung (6) zur kontinuierlichen Versorgung der Entladungslampe, die eine Spannung V2 und einen Strom mit der Starke 12 zwischen der Anode (2) und der Kathode (3) während einer Dauer t2 erzeugen kann,
- eine Zündschaltung (5) für die Entladungslampe (1), die einen elektrischen Zündimpuls (5') mit der Stärke I1 und der Spannung V1 an die Zündelektrode (4) der Entladungslampe liefern kann, die unter anderem etwas vor und etwas nach den Lichtblitzen eine feine ionisierte Strömung (25) mit der Stärke I2 zwischen der Anode (2) und der Kathode (3) während einer Dauer t2' erzeugt,
- eine Vorexpansionsschaltung (8), die zwischen der Anode (2) und der Kathode (3) der Entladungslampe (1) verbunden ist, wobei die Vorexpansionsschaltung (8) geeignet ist, einen elektrischen Vorimpuls der Stärke I4 unter einer Spannung V4 in der Entladungslompe (1) nach der Erzeugung der feinen ionisierten Strömung (25) der Stärke I2 und vor der Erzeugung eines oder mehrerer Hauptlichtimpulse (26) in der Entladungslampe (1) zu erzeugen, wodurch ein Voflichtimpuls (27) in der Entladungslampe (1) während einer Dauer t4' erzeugt wird, wobei die Dauer t4' des Vorlichtimpulses (27) zwischen den Dauern t2' und t3 liegt, wobei die Stromstärke I4 zwischen den Stärken I2 und I3 liegt, wobei die Spannung V4 niedriger als die Spannung V3 und höher als die Spannung V2 ist, so dass der Strom 12 blockiert wird, und wobei sie derart gewählt wird, dass die Bildung eines vorerhitzten Plasmas zwischen der Anode (2) und der Kathode (3) der Entladungslampe (1) möglich ist,
- eine Hauptentladungsschaltung (7), die zwischen der Anode (2) und der Kathode (3) der Entladungslampe (1) verbunden ist, wobei die Hauptentladungsschaltung (7) geeignet ist, die elektrische Energie, die für die Erzeugung einer oder mehrerer elektrische Entladungen der Stärke 13 notwendig ist, unter einer Spannung V3 in der Entladungslampe (1) zu speichern und zu entladen, wodurch ein Lichtimpuls oder eine Reihe von Hauptlichtimpulsen (26) während einer Dauer t3, die kürzer als die Dauer t2' ist, erzeugt wird, wobei die Stromstärke 13 größer als die Stromstärke 12 und die Spannung V3 höher als die Spannung V4 ist, um Strom I4 zu blockieren, wobei der elektrische Vorimpuls nach dem Ende der Hauptlichtimpulse (26) weiterhin in der Entladungslampe (1) erzeugt wird, und wobei die feine ionisierte Strömung (25) weiterhin in der Entladungslampe (1) nach dem Ende des elektrischen Vorimpulses erzeugt wird.

2. Lichtblitzgenerator nach Anspruch 1, **dadurch gekennzeichnet**, die Vorexpansionsschaltung (8) folgendes umfasst:
- eine variable Versorgung (9), die einen Strom mit einer Stärke von ungefähr 400 Milliampere unter einer Spannung zwischen 250 Volt und 1000 Volt liefern kann, wobei die Stromstärke I4 des Vorlichtimpulses (27) zwischen 50 Ampere und 100 Ampere beträgt, vorzugsweise gleich 80 Ampere ist,
- ein Umschaltmittel (10), das in Serie mit der Versorgung (9) der Vorexpansionsschaltung montiert ist,
- eine Schutzdiode (11), die in Serie mit dem Umschaltmittel (10) und der Versorgung (9) der Vorexpansionsschattung montiert ist, wobei die Schutzdiode (11) geeignet ist, die Rückkehr der elektrischen Energie zur Versorgung (9) der Vorexpansionsschaltung zu verhindern.

3. Lichtblitzgenerator nach einem der Ansprüche 1 oder 2, **dadurch gekennzeichnet, dass** er eine Sicherheitsschaltung (12) umfasst, die zwischen der Anode (2) und der Kathode (3) der Entladungslampe (1) verbunden ist, wobei die Sicherheitsschaltung (12) geeignet ist, eine Sicherheitsspannung V5 und einen Sicherheitsstrom I5 an die Entladungslampe (1) kontinuierlich zu liefern, wenn der Strom I2 unterbrochen ist, wodurch eine sehr feine ionische Strömung (28) zwischen der Anode (2) und der Kathode (3) der Entladungslampe (1) erzeugt wird, wobei die Spannung V5 und die Stromstärke I5 geringer als die Spannung V2 bzw. die Stromstärke I2 sind.

4. Lichtblitzgenerator nach Anspruch 3, **dadurch gekennzeichnet, dass** die Sicherheitsschattung (12) folgendes umfasst:
- eine Versorgung (13), die es der Sicherheitsschaltung (12) ermöglichen kann, den Strom der Starke I5 unter des Spannung V5 zu liefern, wobei die Sicherheitsspannung V5 und die Sicherheitsstromstarke 15 bis zu 3000 Volt bzw. 15 Milliampere erreichen können,
- ein Umschaltmittel (14), das in Serie mit der Versorgung der Sicherheitsschaltung (13) montiert ist,
- eine Schutzdiode (15), die in Serie mit dem Umschaltmittel (14) und der Versorgung der Sicherheitsschaltung (13) montiert ist, wobei die Schutzdiode (15) geeignet ist, die Rückkehr der elektrischen Energie zur Versorgung der Sicherheitsschaltung (13) zu verhindern.

5. Lichtblitzgenerator nach einem der Ansprüche 1 bis 4, **dadurch gekennzeichnet, dass** die Hauptentladungsschaltung (7) folgendes umfasst:
- eine Hauptversorgung (16), die es der Hauptentladungsschaltung (7) ermöglichen kann, elektrische Energie unter dem Strom der Stärke I3 und der Spannung V3 zu liefern, wobei die Stromstärke 13 und die Spannung V3 ungefähr 10 kA bzw. 5 kV betragen,
- eine Entladungsleitung (17), die parallel mit der Hauptversorgung (16) und der Entladungslampe (1) montiert ist, wobei die Entladungsleitung (17) aus einer Reihe von induktiven und kapazitiven Elementen zusammengesetzt ist und die von der Hauptversorgung (16) gelieferte elektrische Energie speichern und diese in die Entladungslampe (1) entladen kann,
- ein Umschaltmittel (18), das in Serie it der Entladungsleitung (17) und der Entladungslampe (1) montiert ist, wobei das Umschaltmittel (18) geeignet ist, die in der Entladungsleitung (17) gespeicherte elektrische Energie zu blockieren oder durchzulassen,
- eine Schutzdiode (19), die in Serie mit der Entladungslampe (1), der Entladungsleitung (17) und dem Umschaltmittel (18) montiert ist, wobei die Schutzdiode (19) geeignet ist, die Rückkehr der elektrischen Energie zur Entladungsleitung (17) zu verhindern.

6. Lichtblitzgenerator nach einem der Ansprüche 1 bis 5, **dadurch gekennzeichnet, dass** die kontinuierliche Versorgungsschaltung (6) folgendes umfasst:
- eine Versorgung (20), die einen Strom mit einer Stärke von ungefähr 60 Milliampere unter einer Spannung zwischen 500 Volt und 3000 Volt liefern kann, wobei die Stromstärke 12 zwischen der Anode (2) und der Kathode (3) der Entladungslampe (1) ungefähr einige Dutzend Milliampere beträgt,
- einen Widerstand (21), der in Serie mit der Versorgung der kontinuierlichen Versorgungsschaltung (20) montiert ist.

7. Lichtblitzgenerator nach einem der Ansprüche 1 bis 6, **dadurch gekennzeichnet, dass** er ein Synchronisiermittel, wie beispielsweise eine programmierbare Schaltung, umfasst.

8. Lichtblitzgenerator nach einem der Ansprüche 1 bis 7, **dadurch gekennzeichnet, dass** die Hauptentladungsschaltung (7) induktive Elemente umfasst.

9. Lichtblitzgenerator nach einem der Ansprüche 1 bis 8, **dadurch gekennzeichnet, dass** die Umschaltmittel (10, 14, 18) der verschiedenen Schaltungen (7, 8, 12) Umschalter im festen Zustand sind.

10. Absorptionsspektrometer, umfassend eine Kamera mit Spaltabtastung, **dadurch gekennzeichnet, dass** es einen Lichtblitzgenerator, wie in einem der Ansprüche 1 bis 9 definiert, umfasst.

11. Verfahren zur Erzeugung von Lichtblitzen durch einen Lichtblitzgenerator, umfassend eine Hochdruckentladungslampe (1), umfassend drei Elektroden (2, 3, 4), darunter eine Anode (2), eine Kathode (3) und eine Zündelektrode (4), wobei die. Entladungslampe (1) geeignet ist, elektrische Impulse zu empfangen und Lichtimpulse zu erzeugen, wobei das Verfahren **dadurch gekennzeichnet ist, dass** es folgendes umfasst:
- einen Schritt, der darin besteht, Spannung V2 zwischen der Anode (2) und der Kathode (3) der Entladungslampe (1) während einer Dauer t2 zu liefern,
- einen Schritt der Erzeugung eines elektrischen Zündimpulses (5') der Stärke I1 und der Spannung V1 auf der Zündelektrode (4) der Entladungslampe, der unter anderen etwas vor und etwas nach den Lichtimpulsen eine feine ionisierte Strömung (25) der Stärke 12 zwischen der Anode (2) und der Kathode (3) während einer Dauer t2' erzeugt,
- einen Schritt der Speicherung der elektrischen Energie, die notwendig ist, um eine oder mehrere elektrische Entladungen der Stärke I3 unter einer Spannung V3 in der Entladungslampe (1) zu erzeugen,
- einen Schritt der Erzeugung eines elektrischen Vorimpulses der Stärke 14 unter einer Spannung V4 in der Entladungslompe (1) nach der Erzeugung der feinen ionisierten Strömung (25) der Stärke I2 und vor der Erzeugung eines oder mehrerer Hauptlichtimpulse (26) in der Entladungslampe (1), wodurch ein Lichtvorimpuls (27) in der Entladungslampe (1) während einer Dauer t4' erzeugt wird, wobei die Dauer t4' des Vorlichtimpulses (27) zwischen den Dauern t2' und T3 liegt, wobei die Stromstärke 14 zwischen stromstärken I2 und I3 liegt, wobei die Spannung V4 niedriger als die Spannung V3 und höher als die Spannung V2 ist, um strom 12 zu blockieren, und wobei sie derart gewählt wird, sie die Bildung eines vorerhitzten Plasmas zwischen der Anode (2) und der Kathode (3) der Enttadungsiampe (1) ermöglicht,
- einen Schritt der Entladung der notwendigen elektrischen Energie für die Erzeugung einer oder mehrerer elektrischer Entladungen in der Entladungslampe (1), wodurch ein Lichtimpuls oder eine Reihe von Hauptlichtimpulsen (26) während einer Dauer t3, die kürzer als die Dauer t2' ist, erzeugt wird, wobei die Stromstärke 13 größer als die Stromstärke I2 und die Spannung V3 höher als die Spannung V4 ist, um den Strom I4, zu blockieren, wobei der elektrische vorimpuls in der Entladungslampe (1) nach dem Ende der Hauptlichtimpulse (26) weiterhin erzeugt wird und die feine ionisierte Strömung (25) in der Entladungslampe (1) nach dem des elektrischen Vorimpulses weiterhin erzeugt wird.
